# EUROPEAN PATENT APPLICATION

(11) **EP 4 471 974 A1**
(43) Date of publication of application: **04.12.2024**
(21) Application number: 23883015.2
(22) Date of filing: 20.10.2023
(51) Int. Cl.: H01M 50/591, H01M 50/588, H01M 50/24, H01M 50/503, H01M 50/526, C08G 77/42, C08L 83/04, C08K 3/36

(54) **FIRE-RESISTANT BUSBAR HAVING INTEGRATED CAP AND BATTERY PACK COMPRISING SAME**

(30) Priority: 27.10.2022 KR 20220140043
(71) Applicant: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/016356
(87) International publication number: WO 2024/090909

(57) **Abstract**

The present technology provides a cap-integrated fire-resistant bus bar including: a bus bar conductor part; a covering of a fire-resistant silicone that includes a cap part covering both ends of the bus bar conductor part and a body covering part integrally coupled to the cap part while surrounding the body of the bus bar conductor part between the both ends and that is ceramicized at high temperatures to support the bus bar conductor part; and a protective layer covering the covering of the fire-resistant silicone. The present technology also provides a battery pack including the cap-integrated fire-resistant bus bar.

## Description

### [Technical Field]

The present invention relates to a fire-resistant bus bar and a battery pack including the same.

More specifically, the present invention relates to a cap-integrated fire-resistant bus bar including: a covering of a fire-resistant silicone that includes a cap part and a body covering part integrally coupled to the cap part and that is ceramicized at high temperatures, and a protective layer surrounding the covering of the fire-resistant silicone to maintain insulation and airtight characteristics even at high temperatures at which ignition occurs inside a battery pack, and a battery pack including the same.

This application claims the benefit of priority based on Korean Patent Application No. 10-2022-0140043, filed on October 27, 2022, and the entire content of the Korean patent application is incorporated herein by reference.

### [Background Art]

A battery pack for use in electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged and discharged through an electrochemical reaction between these components.

A bus bar is used to electrically connect the battery modules. The bus bar is used to electrically connect terminal parts of adj acent battery modules or to connect battery modules to an external electric device.

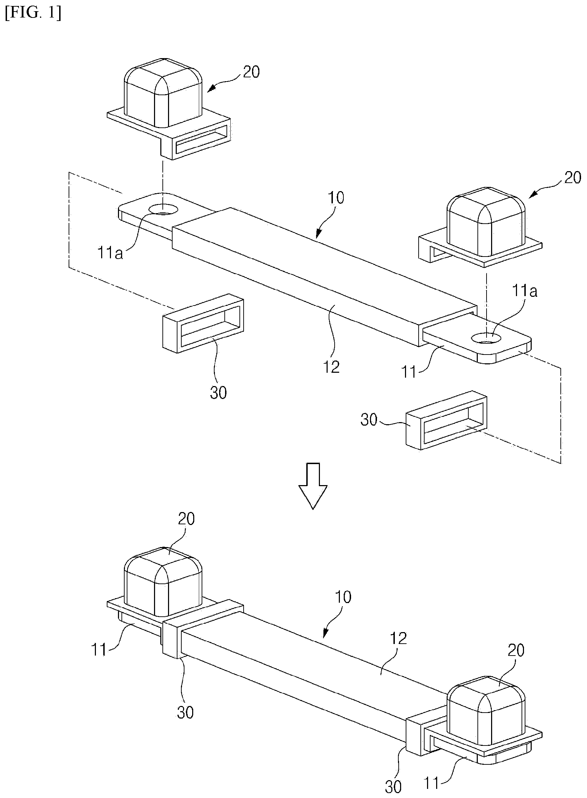

FIG. 1 is a schematic diagram illustrating an assembly structure of a bus bar and a cap of the related art.

As shown in FIG. 1, a bus bar 10 of the related art includes a bus bar conductor part 11 and a sheath layer 12 surrounding the bus bar conductor part 11. The bus bar conductor part 11 is, for example, a high-purity copper conductor part such as C1100 or a conductor part formed of a metal such as aluminum. The sheath layer 12 is formed of general silicone rubber or epoxy. Conventionally, a cap 20 is attached to the sheath layer 12 of the bus bar 10 using a wear-resistant tape 30 or the like. The cap 20 is formed separately to be freely opened or closed when the bus bar 10 is coupled to another electrical connection part by fastening members in fastening holes 11a in both ends of the bus bar 10.

However, the cap 20 is a soft rubber cap and thus is low in insulating properties and vulnerable to impact. In addition, an operation of connecting the bus bar 10 and the cap 20 using a tape is cumbersome and decreases productivity. Furthermore, the wear-resistant tape 30 has fire-resistant performance and thus the bus bar 10 and the cap 20 may be separated from each other without being fixed to each other when the wear-resistant tape 30 melts at a high temperature.

In particular, when in a battery pack, inner components of the battery pack are electrically connected using the bus bar 10 of the related art, not only the rubber cap but also the sheath layer 12 formed of silicone rubber or epoxy melt and the bus bar conductor part 11 is exposed to the outside due to very high temperature of flames (500 to 800 °C or 800 °C or higher, and 1000 °C or higher in a severe case), when the flames occur in the battery pack. In this case, the exposed bus bar conductor part 11 comes into electrical contact with other metal parts in the battery pack, thus causing an electrical short circuit to occur, and the flames spread further due to heat generated due to the electrical short circuit.

To prevent thermal propagation, a bus bar including a sheath layer formed of mica sheet, glass fiber, a heat-resistant silicone (rubber) or the like may be taken into account.

However, in such a situation in which extremely high heat is generated, thermal propagation cannot be sufficiently prevented using the above-described materials. For example, a heat-resistant temperature of general heat-resistant silicone rubber is only in a range of 125 to 300 °C and thus a situation in which ignition occurs in a battery pack cannot be effectively coped with. In addition, the sheath layer formed of mica sheet or glass fiber does not exhibit sufficient fire-resistance performance.

As described above, there have been recent demands to essentially design battery packs such that flames are prevented from leaking to the outside of the battery packs when ignition occurs in the battery packs.

In addition, there is a need to design a bus bar conductor part to be thermally and electrically insulated from surroundings even at high temperatures when flames occur in the battery pack.

As described above, it is necessary to develop a technique for improving an insulation level and assemblability while securing fire resistance at high temperatures to maintain electrical insulation.

### [Related Art Literature]

### [Patent Document]

Korean Patent Publication Laid-Open No. 10-2022-0001228

### [Disclosure]

### [Technical Problem]

The present invention is directed to providing a fire-resistant bus bar for maintaining thermal and electrical insulation as long as possible even when flames occur in a battery pack.

The present invention is also directed to providing a cap-integrated fire-resistant bus bar in which not only a body covering part of a bus bar conductor part but also a cap part covering both ends of the bus bar conductor part are integrally formed.

The present invention is also directed to providing a battery pack including the fire-resistant bus bar.

### [Technical Solution]

According to an aspect of the present invention, a cap-integrated fire-resistant bus bar includes: a bus bar conductor part; a covering of a fire-resistant silicone that includes a cap part covering both ends of the bus bar conductor part and a body covering part integrally coupled to the cap part while surrounding a body of the bus bar conductor part between the both ends and that is ceramicized at high temperatures to support the bus bar conductor part; and a protective layer covering the covering of the fire-resistant silicone.

The fire-resistant silicone may be ceramicized at a temperature of 500 to 1700 °C.

The fire-resistant silicone may be ceramicized by sintering a silicone resin containing a silicone compound represented by Chemical Formula 1 below and a metal oxide containing a silicon oxide.

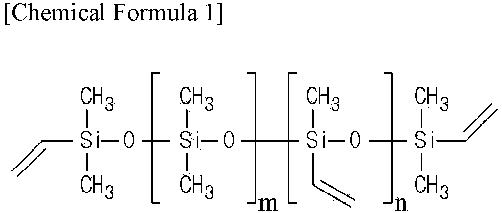

In Chemical Formula 1, m and n are each an integer of 10 to 30.

The silicone resin and the metal oxide may be contained in a weight ratio of 1:0.5 to 1:1.5.

The metal oxide containing silicon oxide may contain at least one of pure silicon dioxide, silica, quartz, quartzite, tridymite, and keatite.

The protective layer may be a glass fiber layer or a mica layer.

A fastening member accommodation space may be formed in the cap part.

The protective layer may be provided on an inner circumferential surface of the cap part.

The protective layer may not be provided on a side of the covering of the fire-resistant silicone corresponding to a connection part connecting the cap part and the body covering part but may be provided only on an upper surface of the connection part.

The bus bar conductor part may be coated with the covering of the fire-resistant silicone by insert injection molding performed by injecting the fire-resistant silicone into a mold into which the bus bar conductor part is inserted.

The cap-integrated fire-resistant bus bar may be a high-voltage bus bar electrically connecting high-voltage terminal parts of a plurality of battery modules.

According to another aspect of the present invention, a battery pack includes a plurality of battery modules, an anti-flame partition installed between the plurality of battery modules, the cap-integrated fire-resistant bus bar described above for electrically connecting the plurality of battery modules, and a pack housing accommodating the plurality of battery modules and the anti-flame partition.

The anti-flame partition may be provided with a bus bar installation through-hole or a bus bar installation groove, the cap-integrated fire-resistant bus bar may be seated in the bus bar installation through-hole or the bus bar installation groove, both ends of the bus bar conductor part of the cap-integrated fire-resistant bus bar may be electrically coupled to terminal parts of battery modules located at both sides of the anti-flame partition, and the cap part of the cap-integrated fire-resistant bus bar may cover portions of the both ends and coupling portions of the terminal parts that are coupled to each other.

### [Advantageous Effects]

A fire-resistant bus bar of the present invention includes a covering of a fire-resistant silicone ceramicized to support a bus bar conductor part when flames occur in a pack instead of a sheath layer burned in flames, thus maintaining insulation and airtight characteristics even at high temperatures.

In the fire-resistant bus bar of the present invention, a body covering part of the bus bar conductor part and a cap part covering both ends of the bus bar conductor part are integrally formed, thereby simplifying the manufacture of the bus bar and a cap and significantly improving the connection strength of the bus bar and the cap.

The cap part can be formed of a fire-resistant silicone to further enhance insulation and fire-resistant airtight properties of the cap part.

The fire-resistant bus bar of the present invention may include a protective layer to cover the covering of the fire-resistant silicone, and the protective layer may primarily function as a fire-resistant wall while preventing the covering of the fire-resistant silicone from being directly exposed to flames, thereby maintaining an overall shape and dimensions.

### [Brief Description of the Drawings]

FIG. 1 is a schematic diagram illustrating an assembly structure of a bus bar and a cap of the related art.
FIG. 2 is a perspective view of a cap-integrated fire-resistant bus bar according to an embodiment of the present invention.
FIG. 3 is a side cross-sectional view of a cap-integrated fire-resistant bus bar according to an embodiment of the present invention.
FIG. 4 is a plan view of a cap-integrated fire-resistant bus bar according to an embodiment of the present invention.
FIG. 5 is a photograph of a glass fiber layer included in a cap-integrated fire-resistant bus bar of the present invention.
FIG. 6 is a side cross-sectional view of a cap-integrated fire-resistant bus bar according to another embodiment of the present invention.
FIG. 7 is a perspective view of a cap-integrated fire-resistant bus bar according to another embodiment of the present invention.
FIG. 8 is a schematic view illustrating an example of a structure of a battery pack in which a cap-integrated fire-resistant bus bar of the present invention is installed.
FIG. 9 is a schematic view illustrating another example of a structure of a battery pack in which a cap-integrated fire-resistant bus bar of the present invention is installed.
FIG. 10 is a perspective view illustrating a process of installing a cap-integrated fire-resistant bus bar of the present invention in a battery pack.
FIG. 11 is a side cross-sectional view illustrating a state in which a cap-integrated fire-resistant bus bar according to the present invention is installed in a battery pack.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments and include all modifications, equivalents, and alternatives falling within the idea and scope of the present invention.

### [Cap-Integrated Fire-Resistant Bus Bar]

A cap-integrated fire-resistant bus bar of the present invention includes: a bus bar conductor part; a covering of a fire-resistant silicone that includes a cap part covering both ends of the bus bar conductor part and a body covering part integrally coupled to the cap part while surrounding the body of the bus bar conductor part between the both ends and that is ceramicized at high temperatures to support the bus bar conductor part; and a protective layer covering the covering of the fire-resistant silicone.

The bus bar conductor part may be a general metal conductor part. That is, the bus bar conductor part may be formed of a high-purity tough pitch copper material with purity of 99.9% or more, e.g., C1100, or an aluminum material. That is, a material of the bus bar conductor part of the present invention is not particularly limited as long as it is a metal material available as a bus bar conductor part for connecting electrical components. The both ends of the bus bar conductor part are electrically connected to corresponding electrical connection parts.

The covering of the fire-resistant silicone includes a cap part covering the both ends of the bus bar conductor part, and the body covering part integrally coupled to the cap part while surrounding the body of the bus bar conductor part between the both ends.

The covering of the fire-resistant silicone is ceramicized at high temperatures to support the bus bar conductor part. The fire-resistant silicone may be ceramicized at a temperature of 500 to 1700 °C. The fire-resistant silicone of the present invention with a fire-resistant temperature of 500 °C or higher is distinguished from a heat-resistant silicone with a heat-resistant temperature of less than 300 °C. The heat-resistant silicone is a silicone resin or rubber composition that is a material with flexibility and bendability that are characteristics of a silicone but is burned out or burned into ashes at a high temperature of 500 °C or higher. Therefore, there is a limit to applying the heat-resistant silicone to prevent a short circuit from occurring in a battery pack during heat propagation or prevent heat propagation.

The covering of the fire-resistant silicone is ceramicized, i.e., it exhibits "fire-resistant" performance, at a high temperature of 500 °C or higher, thus maintaining insulation and airtightness characteristics in the battery pack even when flames occur.

As described above, a fire-resistant bus bar according to the present invention exhibits high fire-resistant performance, because the fire-resistant bus bar includes fire-resistant silicone and a structure thereof is improved.

The fire-resistant silicone is a composition containing a silicone resin and a metal oxide as main components and thus exhibits flexibility and bendability, which are characteristics of a silicone, at room temperature. In addition, the fire-resistant silicone has a certain level of elasticity and thus exhibits high impact resistance and insulation, and a silicone sintered body with a complex ceramic structure may be formed due to sintering of the silicone resin and the metal oxide when the fire-resistant silicone is exposed to a high temperature.

Specifically, the silicone resin contained in the fire-resistant silicone produces silica in a powder form when burned at a high temperature. The produced silica reacts with the metal oxide contained in the fire-resistant silicone to form an "eutectic mixture" on an edge of the metal oxide, so that bridging may be performed between the silica and the metal oxide, thus causing the formation of a ceramic product that is cured at an ignition temperature and condensed when cooled. Such a ceramic body prevents a short-circuit or disconnection between conductors due to damage to the covering of the fire-resistant silicone even when external mechanical impact is applied or moisture penetrates in the case of a fire, thereby performing an electrical function of the bus bar.

To this end, the fire-resistant silicone according to the present invention includes a silicone resin and a metal oxide.

The silicone resin is not particularly limited as long as it is a resin containing silicon (Si) in a molecule but preferably contains a silicone compound represented by Chemical Formula 1 below (hereinafter referred to as a silicone compound of Chemical Formula 1).

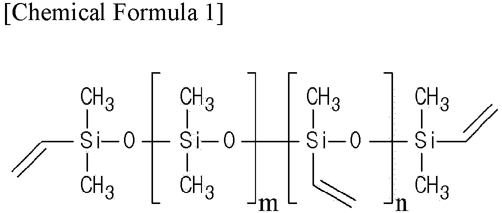

In Chemical Formula 1 above, m and n are each an integer of 10 to 30.

In Chemical Formula 1, the silicone compound includes a methylsiloxane repeating unit, and includes a vinyl group at the inside of and an end of the methylsiloxane repeating unit. The vinyl group is contained in the repeating unit as well as at the end of the silicone compound of Chemical Formula 1 to increase a degree of polymerization of the silicone resin when exposed to a high temperature, thereby implementing excellent fire-resistance characteristics compared to a silicone compound that does not contain the vinyl group.

In addition, the weight-average molecular weight of the silicone compound of Chemical Formula 1 may be adjusted to be in a specific range. The silicone compound of Chemical Formula 1 is a compound serving as a base of the silicone resin and thus may affect the physical properties of the fire-resistant silicone at room temperature and high temperatures according to the weight-average molecular weight of the silicone compound of Chemical Formula 1. For example, when the weight-average molecular weight of the silicone compound of Chemical Formula 1 is excessively high, the viscosity of the silicone resin increases and thus reactivity may decrease during high-temperature sintering, and when the weight-average molecular weight is extremely low, the elasticity and flexibility of the silicone resin at room temperature decrease, thus reducing the manufacturing processability, impact resistance, etc. of the fire-resistant bus bar. Therefore, the weight-average molecular weight of the silicone compound of Chemical Formula 1 according to the present invention may be adjusted to be in a range of 1,000 to 9,000 g/mol, and specifically, a range of 3,000 to 8,000 g/mol or a range of 5,000 to 7,000 g/mol.

In addition, the metal oxide is a composition containing silicon oxide and may function as a crystalline nucleus to form a high-density ceramic body together with the silicone resin described above when exposed to high temperatures.

The metal oxide may include at least one of silicon dioxide, silica, quartz, quartzite, tridymite, and keatite. The metal oxide may include pure silicon dioxide (SiO₂) and a mineral, e.g., quartz, which contains silicon dioxide (SiO₂) as a main component, is economically feasible, has a high melting point (high fire-resistance) and a high sintering degree, and may exhibit excellent electrical insulation performance. In particular, silicon dioxide, silica, quartz, etc. may contribute to improving various performances in a sintering process, cause fire-resistant silicone to be easily dissolved and molded, and reduce defects that may occur in ceramic bodies.

In addition, the metal oxide preferably has a crystal structure that increases fire resistance, insulation, mechanical strength, etc. when sintered together with a silicone resin. The metal oxide may be in the form of powder, and may have, but is not limited thereto, a size of 200 µm or less, for example, a size of 0.1 µm to 200 µm or a size of 0.1 µm to 100 µm.

The silicone resin may further contain a silicone compound represented by Chemical Formula 2 below (hereinafter referred to as "silicone compound of Chemical Formula 2"), and the silicone compound of Chemical Formula 2 participates in the sintering of the metal oxide at a high temperature together with the silicone compound of Chemical Formula 1 to form a silicone sintered body.

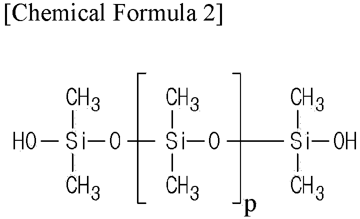

In Chemical Formula 2 above, p is an integer of 10 to 30.

The silicone compound of Chemical Formula 2 may increase the flexibility of the fire-resistant silicone at room temperature and induce the termination of the sintering of the silicone resin through dehydration condensation with the silicone compound of Chemical Formula 1 during sintering, thereby terminating the formation reaction of the ceramic body.

To this end, the silicone compound of Chemical Formula 2 may be used in an amount of less than 10 parts by weight, for example, 0.5 to 9 parts by weight, 1 to 6 parts by weight, or 2 to 5 parts by weight, based on the 100 parts by weight of the fire-resistant silicone.

In addition, the fire-resistant silicone may contain a silicone resin and a metal oxide in a certain ratio to realize high elasticity at room temperature and form a ceramic body quickly when exposed to high temperatures.

Specifically, in the fire-resistant silicone, a weight ratio between the silicone resin and the metal oxide may be 1:0.5 to 1:1.5, and specifically, 1:0.8 to 1:1.2. When the weight ratio of the metal oxide is less than 0.5, it is difficult to obtain a ceramic structure having a high-density crystal structure at high temperatures and thus sufficient fire resistance and mechanical strength may not be achieved. When the weight ratio of the metal oxide exceeds 1.5, the flexibility of the fire-resistant silicone decreases at room temperature and thus the fire-resistant silicone is difficult to be processed.

For example, the fire-resistant silicone of the present invention may contain 35 to 50 wt% of the silicone compound of Chemical Formula 1, 16 to 32 wt% quartz, 10 to 27 wt% silicon dioxide, and 1 to 6 wt% of the silicone compound of Chemical Formula 2, and may further contain a certain solvent to increase processability during the manufacture of the fire-resistant silicone in some cases.

As described above, the fire-resistant silicone of the present invention is cured and ceramicized by sintering the silicone resin and the metal oxide at 500 °C or higher. The fire-resistant silicone may be ceramicized at temperatures of up to 1700 °C, and theoretically can be kept partially ceramicized even at temperatures above 1700 °C. However, at a temperature above 1700 °C, a time period during which the fire-resistant silicone is kept ceramicized may decrease, thus causing a failure of the maintenance of fire-resistance performance required inside a battery pack.

As described above, the fire-resistant silicone has the same properties as rubber having bendability, flexibility, and elasticity before being ceramicized. Therefore, the covering of the fire-resistant silicone is easily injection-molded or applied to the bus bar conductor part as described below.

The covering of the fire-resistant silicone is flexible before being ceramicized and thus may flexibly follow deformation of the bus bar conductor part. Therefore, when the fire-resistant bus bar of the present invention is installed in the battery pack, it is possible to easily respond to even a slight assembly tolerance, thus improving assemblability. For example, when a battery module is fastened to the battery pack by bolting, the covering of the fire-resistant silicone may absorb the movement or slight distortion of a bus bar conductor part coupled to the battery module. In addition, even when the battery pack vibrates due to the vibration of an electric vehicle, the covering of the fire-resistant silicone may naturally absorb the vibration.

In particular, the cap-integrated fire-resistant bus bar of the present invention is characterized in that the covering of the fire-resistant silicone includes not only a body covering part surrounding the body of the bus bar conductor part but also a cap part covering both ends of the bus bar conductor part. The cap part is integrally coupled to the body covering part and thus it is not necessary to connect the cap part to the bus bar using a separate tape unlike in the related art. Therefore, the strength of connection between the cap part and the body covering part further improves. The cap-integrated fire-resistant bus bar may be manufactured by integrally molding the cap part and the body covering part, thereby simplifying a manufacturing process. In addition, the cap part is formed of fire-resistant silicone and thus can be ceramicized at high temperatures to protect the bus bar conductor part and an electrical connection part thereof together, thereby greatly enhancing insulation performance and airtightness.

Meanwhile, when the fire-resistant silicone is ceramicized at a high temperature, the fire-resistant silicone is thermally and electrically insulated but the mechanical strength thereof decreases slightly and thus the fire-resistant silicone is likely to be broken by an external force. According to the present invention, a protective layer is provided to cover the covering of the fire-resistant silicone to structurally improve the rigidity of the covering of the fire-resistant silicone.

The protective layer is a layer covering the outside of the covering of the fire-resistant silicone to protect the covering of the fire-resistant silicone not to be directly exposed to flames. That is, the protective layer primarily functions as a fire-resistant wall. In addition, when the covering of the fire-resistant silicone is ceramicized, the protective layer covers the ceramicized covering of the fire-resistant silicone to maintain an overall shape and dimensions thereof.

A material of the protective layer may be, for example, glass fiber or mica material with insulating and heat resistance properties. For example, the covering of the fire-resistant silicone may be prevented from being exposed to the outside by winding a glass fiber tape or mica tape around an outer side of the covering of the fire-resistant silicone. However, the protective layer is not limited thereto and may be formed of a different material with excellent insulation or heat resistance properties.

A shape of the cap-integrated fire-resistant bus bar will be described in detail with respect to the following embodiments.

### [Embodiments of the Present Invention]

### (First Embodiment)

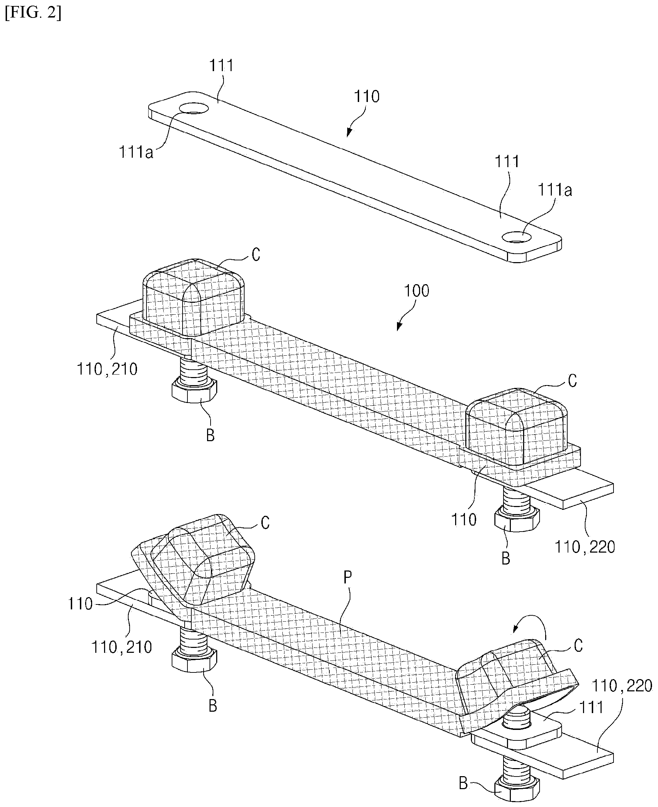

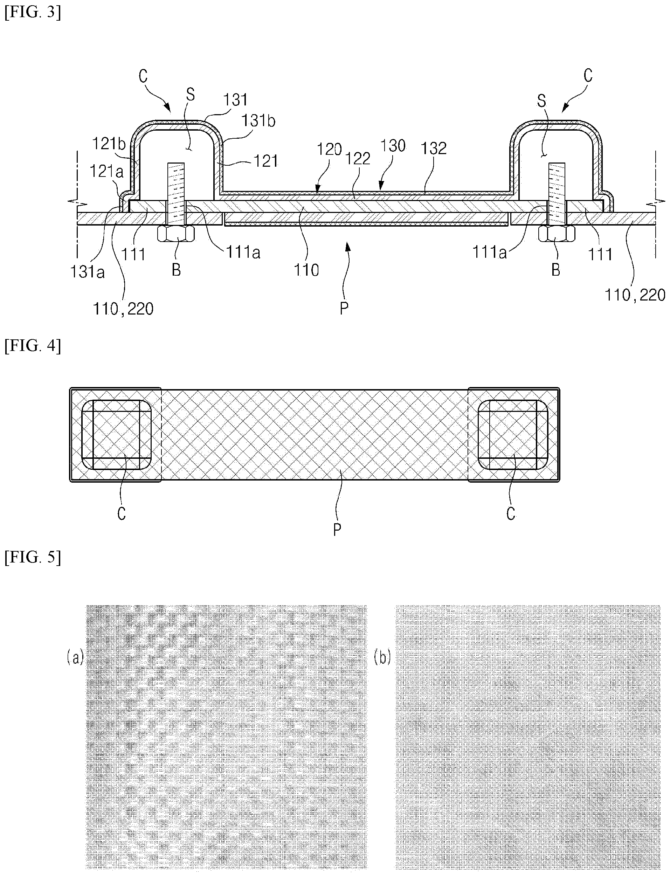

FIGS. 2, 3, and 4 are a perspective view, a side cross-sectional view, and a plan view of a cap-integrated fire-resistant bus bar according to an embodiment of the present invention. FIG. 5 is a photograph of a glass fiber layer included in a cap-integrated fire-resistant bus bar of the present invention.

As shown in the drawings, an innermost side of a cap-integrated fire-resistant bus bar 100 is provided with a bus bar conductor part 110. Both ends 111 of the bus bar conductor part 110 may be exposed to the outside and provided with fastening holes 111a for coupling to a corresponding electrical connection part (e.g., a bus bar conductor part 110 of another fire-resistant bus bar or terminal parts 210 and 220 of a battery module) through a fastening member B.

A body part of the bus bar conductor part 110 excluding the both ends 111 is provided with a central covering part P. Caps C are provided on the both ends 111 of the bus bar conductor part 110. The caps C are coupled to the central covering part P.

Referring to FIG. 3, the caps C each include a covering 120 of a fire-resistant silicone and a protective layer 130. The central covering part P also includes a covering 120 of a fire-resistant silicone and a protective layer 130. That is, the covering 120 of the fire-resistant silicone includes a cap part 121 forming the body of a cap and a body covering part 122 surrounding the body of the bus bar conductor part 110, and the cap part 121 and the body covering part 122 are integrally connected.

The protective layer 130 includes a cap protective layer 131 covering the cap part 121 and a body protective layer 132 covering the body covering part 122.

An accommodation space S of the fastening member B is formed in the cap C or the cap part 121. Therefore, when the fastening members B are coupled to a corresponding electrical connection part (e.g., a bus bar connection part 110 of another fire resistant bus bar or the terminal parts 210 and 220 of the battery module), exposed ends of the fastening members B may be accommodated in the accommodation space S in the cap C or the cap part 121. Accordingly, the fastening member B is protected by the cap part 121 to prevent a short circuit due to contact with other external components. As shown in the drawing, the accommodation space S may be a space sufficient to accommodate the fastening member B. A coupling member (e.g., a nut) (not shown) corresponding to the fastening member B may be installed in the accommodation space S as needed. In this case, nuts and the ends of the fastening members B may be firmly fastened to each other by screw-coupling. Alternatively, when necessary, the size of the accommodation space S may be reduced such that the ends of the fastening members B may be tightly fitted into the accommodation space. Accordingly, the fastening members B and the cap part 121 are more firmly coupled to each other, so that the cap part 121 may reliably cover an electrical connection part corresponding to the cap-integrated fire-resistant bus bar 100. The cap part 121 may include a base part 121a, and a fastening member insertion part 121b extending upward from the base part 121a and including therein an accommodation space S of the fastening members B. In the drawings, an example in which the base part 121a covers an upper surface and sides of both ends of the bus bar conductor part is shown. However, when necessary, the base part 121a may be extended in size such that the base part 121a covers the sides of the bus bar conductor part and sides of a corresponding electrical connection part.

The cap part 121 and the body covering part 122 of the covering 120 of the fire-resistant silicone may be integrally molded. For example, the covering 120 of the fire-resistant silicone may be molded by injecting fire-resistant silicone into a mold (not shown) with the shapes of the cap part 121 and the body covering part 122 of the covering 120 of the fire-resistant silicone. As described above, the fire-resistant silicone may be, for example, a mixture of a silicone resin and a metal oxide and be included in a certain solvent in the form of a coating solution or slurry with fluidity. The covering 120 of the fire-resistant silicone may be molded separately from the bus bar conductor part 110 by injecting a fire-resistant silicone coating solution or slurry into a mold. The covering 120 of the fire-resistant silicone of the present invention may be obtained by removing the mold after drying and curing processes are performed.

In this case, the body of the bus bar conductor part 110 may be covered with the body covering part 122 by inserting the bus bar conductor part 110 into the body covering part 122 of the covering 120 of the molded fire-resistant silicone in a longitudinal direction. In this case, the cap part 121 of the covering 120 of the molded fire-resistant silicone is provided on the both ends 111 of the bus bar conductor part 110 to cover the both ends 111.

As described above, the covering 120 of the fire-resistant silicone may be molded separately from the bus bar conductor part 110 and coupled to the bus bar conductor part 110 but the molding of the covering 120 of the fire-resistant silicone and the coating of the bus bar conductor part 110 with the covering 120 of the fire-resistant silicone may be performed simultaneously by so-called insert injection molding. When the latter method is used, a manufacturing process may further be simplified, thus increasing productivity.

That is, the bus bar conductor part 110 is inserted, and the fire-resistant silicone coating solution or slurry is injected into an insert-injection molding mold (not shown) having the same shape as the covering 120 of the fire-resistant silicone along the perimeter of the bus bar conductor part 110. In this case, the covering 120 of the fire-resistant silicone with the above-described shape is formed as the inside of the mold is filled with the fire-resistant silicone while the bus bar conductor part 110 is covered with the fire-resistant silicone. As shown in FIG. 3, the covering 120 of the fire-resistant silicone including the bus bar conductor part 110 therein may be obtained by removing the mold after drying and curing processes are performed.

As shown in FIGS. 4 and 5, the protective layer 130 is provided on the covering 120 of the fire-resistant silicone. For example, the cap-integrated fire-resistant bus bar 100 of the present invention may be obtained by winding a tape of the protective layer 130 such as a glass fiber tape or a mica tape around the covering 120 of the fire-resistant silicone. In the drawings of the present specification, the protective layer 130 exposed to the outside is displayed in a shape of a lattice type mesh.

The protective layer 130 is also configured to match the shape of the cap part 121. That is, the protective layer 130 may include a base part protective layer 131a covering the base part 121a and an insertion part protective layer 131b covering the fastening member insertion part 121b.

A material of the protective layer 130 may be, for example, a glass fiber or mica material with insulating and heat-resistance properties. That is, a glass fiber tape or mica tape may be wound around an outer side of the covering 120 of the fire-resistant silicone to prevent the covering 120 of the fire-resistant silicone from being exposed to the outside. FIG. 5 shows a photograph of a glass fiber layer.

A glass fiber is an inorganic fibrous material mainly composed of a silicate. The glass fiber may be in the form of glass fiber fabric (see FIG. 5 (a)) obtained by weaving yarn formed by twisting and winding glass fiber strands or the form of nonwoven fabric (see FIG. 5 (b)). The cap-integrated fire-resistant bus bar 100 of the present invention may be manufactured by applying an adhesive to the glass fiber fabric or nonwoven fabric and attaching the glass fiber fabric or nonwoven fabric to the above-described covering 120 of the fire-resistant silicone. Glass fiber has fire-resistant properties and high electrical insulation.

Mica is one of silicate minerals, has a layered structure, generally has a hexagonal crystal shape, and is used as an electrical insulating material or an insulating material. Mica exhibits better fire resistance than the glass fiber. Therefore, mica is more preferable as a material of a protective layer protecting a covering of a fire-resistant silicone. However, the protective layer is not limited thereto and may be formed of a different material with excellent insulation or heat-resistance properties.

For example, the protective layer 130 may be formed by winding a tape of the protective layer 130, which is processed in the form of a tape, around the covering 120 of the fire-resistant silicone. However, a method of forming the protective layer 130 is not limited thereto. For example, the protective layer 130 may be formed on the covering 120 of the fire-resistant silicone by coating, applying, spraying or other known methods.

### (Second Embodiment)

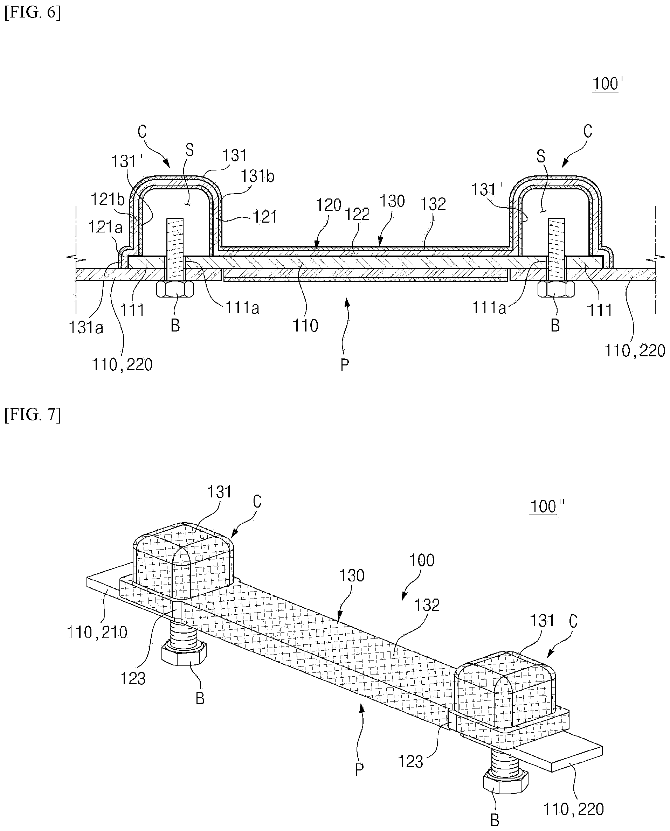

FIG. 6 is a side cross-sectional view of a cap-integrated fire-resistant bus bar according to another embodiment of the present invention.

In a cap-integrated fire-resistant bus bar 100' of the present embodiment, a cap protective layer 131' is provided an inner circumferential surface of a cap part 121. That is, in the embodiment of FIG. 3, no protective layer is provided on an inner circumferential surface of the cap part, which is not exposed to the outside, whereas in the present embodiment, the cap protective layer 131' such as a glass fiber tape or a mica tape is also provided on the inner circumferential surface of the cap part 121.

As in the second embodiment, when both the inner and outer circumferential surfaces of the cap part 121 are covered with cap protective layers 131 and 131', the following advantages are achieved.

The cap protective layers 131 and 131' on the inner and outer circumferential surfaces of the cap part 121 reliably function as fire-resistant walls to prevent a covering of a fire-resistant silicone of the cap part 121 from being exposed to flames.

In addition, because the cap protective layers 131 and 131' on the inner and outer circumferential surfaces completely cover the covering of the fire-resistant silicone therebetween, the cap protective layers 131 and 131' support the cap part 121 to more stably maintain the shape and dimensions of the cap part 121 when the cap part 121 is ceramicized at a high temperature and thus the strength thereof decreases slightly.

### (Third Embodiment)

FIG. 7 is a perspective view of a cap-integrated fire-resistant bus bar according to another embodiment of the present invention.

A cap-integrated fire-resistant bus bar 100" of the present embodiment differs from those of the first and second embodiments, in that the protective layer 130 is not provided on a side of the covering 120 of the fire-resistant silicone corresponding to a connection part 123 connecting the cap part 121 and the body covering part 122.

That is, in the present embodiment, the protective layer 130 is provided only on an upper surface of the connection part 123. As shown in the lowest drawing of FIG. 2, the cap C or the cap part 121 is frequently lifted from or lowered toward the bus bar conductor part 110 for a fastening operation. That is, the cap C or the connection part 123 connecting the cap part 121 and the body covering part 122 is frequently folded. In this case, when the entire connection part 123 is covered with the protective layer 130 that is relatively hard (e.g., glass fiber or mica), processability in the fastening operation may decrease.

In the present embodiment, the protective layer 130 is not provided on both sides of the connection part 123, thereby improving processability in the fastening operation. When necessary, the protective layer 130 may not be provided on the upper surface of the connection part 123 to further improve processability. However, in this case, no protective layer is provided on the connection part 123 and thus fire resistance may decrease. As described above, it is necessary to appropriately determine whether to provide the protective layer on the connection part 123 and determine a range of the protective layer in consideration of processability and fire resistance.

### (Battery Pack)

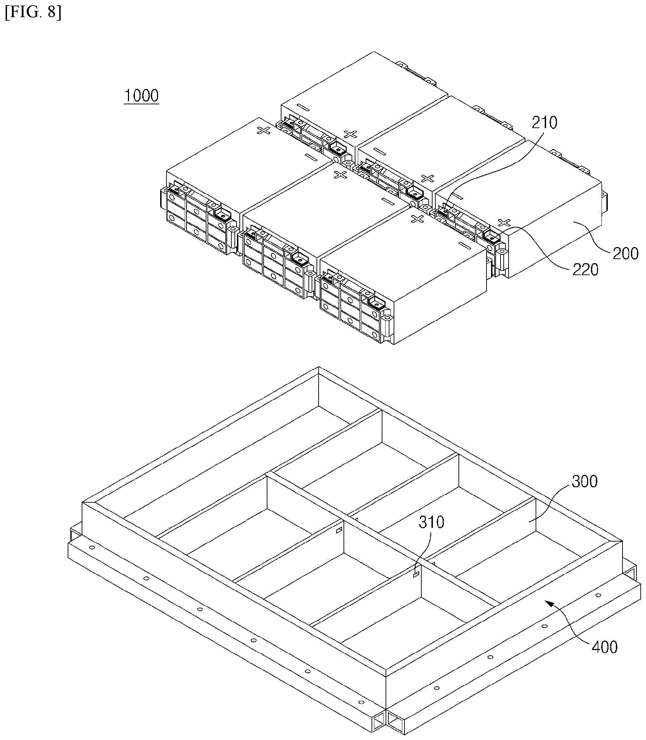

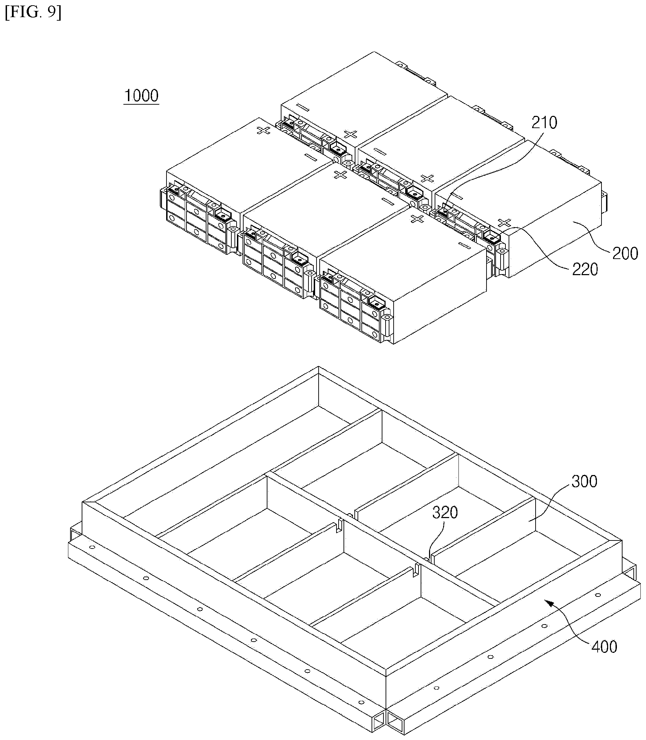

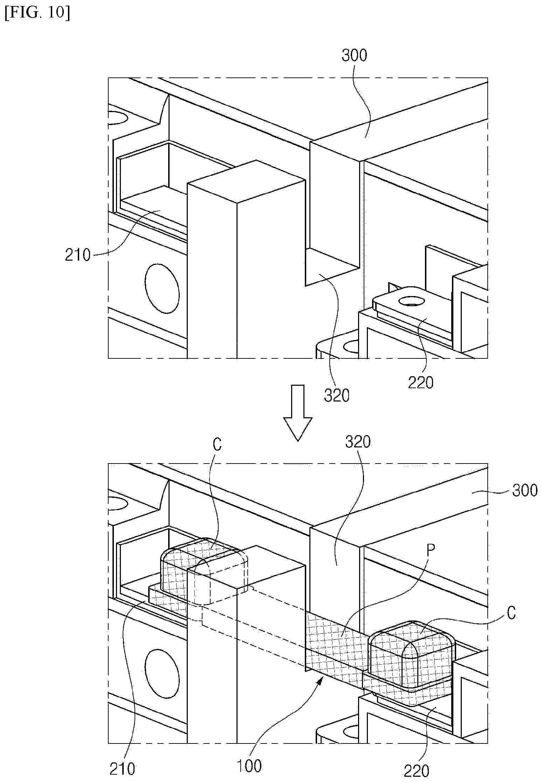

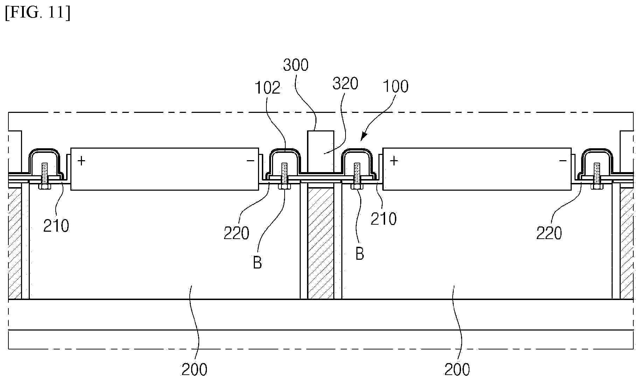

FIG. 8 is a schematic view of an example of a structure of a battery pack in which a cap-integrated fire-resistant bus bar of the present invention is installed. FIG. 9 is a schematic view of another example of a structure of a battery pack in which a cap-integrated fire-resistant bus bar of the present invention is installed. FIGS. 10 and 11 are a perspective view and a side cross-sectional view illustrating a state in which a cap-integrated fire-resistant bus bar of the present invention is installed in a battery pack.

The above-described cap-integrated fire-resistant bus bars 100, 100', and100" of the present invention each include the covering 120 of the fire-resistant silicone ceramicized at high temperatures and the protective layer 130 covering the covering 120 of the fire-resistant silicone to maintain a shape thereof. Therefore, when the cap-integrated fire-resistant bus bars 100, 100', and100" are applied to a battery pack in which ignition may occur, the safety of the battery pack can be greatly improved.

The cap-integrated fire-resistant bus bars 100, 100', and 100" may be used to electrically connect, for example, a plurality of battery modules accommodated in a battery pack. In this case, the cap-integrated fire-resistant bus bar may electrically connect terminal parts of adjacent battery modules. Alternatively, the cap-integrated fire-resistant bus bar may be used to connect battery modules to an external electrical device.

Particularly, high-voltage terminal parts of the battery modules generate relatively high heat due to a high current. Accordingly, higher heat may be concentrated on the high-voltage terminal parts when flames occur in a pack. Therefore, the cap-integrated fire-resistant bus bar of the present invention is applicable as a high-voltage bus bar for electrically connecting high-voltage terminal parts of a plurality of battery modules.

A battery pack 1000 of the present invention may include a plurality of battery modules 200, anti-flame partitions 300 installed between the battery modules 200, the above-described cap-integrated fire-resistant bus bars 100, 100', and 100" for electrically connecting the battery modules 200, and a pack housing 400 accommodating the battery modules 200 and the anti-flame partitions 300.

FIG. 8 illustrates that the plurality of battery modules 200 are accommodated in the pack housing 400. The battery modules 200 each include a cell stack (not shown) in which a plurality of battery cells are stacked, and cell leads with different polarities are drawn out from the battery cells of the cell stack. The cell leads are electrically connected to a bus bar such as a terminal bus bar or an inter-bus bar. The cap-integrated fire-resistant bus bar of the present invention may be used to electrically connect the plurality of battery modules.

Meanwhile, FIGS. 8 and 9 illustrate a general battery module 200 in which a module housing completely surrounds upper, lower, left, and right sides of a battery cell stack. However, the present invention is not limited thereto, and the cap-integrated fire-resistant bus bar of the present invention is also applicable to, for example, a battery module with a moduleless type module housing in which at least one of upper, lower, left and right sides of a cell stack is open or a battery cell block in which all of upper, lower, left and right sides of a cell stack are open. As described above, a battery pack with a so-called cell-to-pack structure may be configured by installing therein cell blocks or battery modules, in which part of or an entire module housing is omitted. The cap-integrated fire-resistant bus bars 100, 100', and 100" of the present invention may be used for electrical connection of cell blocks or moduleless type battery modules installed in such a battery pack having the cell-to-pack structure.

In order to prevent flame propagation between adjacent modules, the battery pack 1000 may include the anti-flame partitions 300 installed between battery modules. The anti-flame partitions 300 may be formed of a metal to secure rigidity. The anti-flame partitions 300 prevent flames from propagating to adjacent modules when a fire occurs in one module. In this case, the anti-flame partitions 300 may be each provided with a bus bar installation through-hole 310 or a bus bar installation groove 320. FIG. 8 illustrates that the anti-flame partition 300 is provided with the bus bar installation through-hole 310. FIG. 9 illustrates that the anti-flame partition 300 is provided with the bus bar installation groove 320. In terms of flame prevention and airtightness, a partition is preferably provided with the bus bar installation through-hole 310 as shown in FIG. 8. An upper part of the bus bar installation groove 320 of FIG. 9 is open, thus facilitating installation of a bus bar and an electrical connection using the bus bar.

The fire-resistant bus bars 100, 100', and 100" may be mounted in the bus bar installation through-hole 310 or the bus bar installation groove 320. In this case, both ends 111 of a bus bar conductor part of the cap-integrated fire-resistant bus bar may be electrically coupled to terminal parts 210 and 220 of battery modules 200 located at both sides of the anti-flame partition 300.

FIGS. 10 and 11 illustrate that the cap-integrated fire-resistant bus bar 100 electrically connects the battery modules 200 in the battery pack 1000. The anti-flame partition 300 is located between adjacent battery modules 200 and provided with the bus bar installation through-hole 310. The cap-integrated fire-resistant bus bar 100 of the present invention is mounted in the bus bar installation groove 320. The shape of the cap-integrated fire-resistant bus bar 100 corresponds to that of the bus bar installation groove 320. Therefore, the cap-integrated fire-resistant bus bar 100 of the present invention may be airtightly brought into surface contact with the anti-flame partitions 300. Accordingly, the airtightness of the battery pack may be further improved.

A cap C integrally formed with the cap-integrated fire-resistant bus bar 100 covers portions of the both ends 111 and the terminal parts 210 and 220 that are coupled to each other. Therefore, it is possible to install a fire-resistant bus bar simultaneously with the coupling of a cap thereto without having to additionally couple a cap to a bus bar as in the related art.

Meanwhile, in the cap-integrated fire-resistant bus bar 100 of the present invention, both a body covering part 122 and a cap part 121 that cover the bus bar conductor part 110 are ceramicized to form a dense sintered body when flames occur in the battery pack 1000. That is, at a high temperature of 500 °C or higher, the body covering part 122 and the cap part 121 are ceramicized and thus the shapes thereof are maintained, unlike a conventional heat-resistant silicone that is burned away or burned into ashes. Accordingly, the covering 120 of the fire-resistant silicone stably supports the bus bar conductor part 110 even when a flame occurs. In addition, the protective layer 130 prevents the covering 120 of the fire-resistant silicone from being in direct contact with flames, thus preventing the deformation of fire-resistant silicone and further enhancing insulation and fire resistance.

### [Experimental Examples]

### (Experimental Example 1)

A fire-resistant silicone containing 50 parts by weight of the silicone compound of Chemical Formula 1, 20 parts by weight of quartz, and 30 parts by weight of pure silicon dioxide was applied to a certain thickness to a copper bus bar conductor part with a cross-sectional area, which is selected from a cross-sectional area that is in a range of 0.5 to 3 mm², excluding both ends thereof. A 0.18 mm glass fiber tape (product name: AGT6WO) manufactured by SWECO was wound twice around a bus bar coated with the fire-resistant silicone to manufacture a fire-resistant silicone coated bus bar of Example 1.

A fire-resistant silicone coated bus bar of Example 2 was manufactured by winding a 0.18 mm mica tape (product name: SA765) manufactured by SWECO twice around the bus bar coated with the fire-resistant silicone.

A bus bar of Comparative Example 1 was manufactured by setting a length of a bus bar conductor part and exposed lengths of both ends of the bus bar conductor part to be the same as those of Examples 1 and 2 and winding a glass fiber tape of AGT6WO around a central portion of the bus bar conductor part. A thickness of covering of the wound glass fiber tape was set to be substantially the same as that of Example 1.

A bus bar of Comparative Example 2 was manufactured by winding a mica tape of SA765 once around a central region of a bus bar conductor part and winding the glass fiber tape of Comparative Example 1 once on the mica tape. A length of the bus bar conductor part and exposed lengths of both ends thereof are the same as those of Examples 1 and 2 and Comparative Example 1.

To test insulation characteristics (insulation maintenance performance) when a fire occurs, a copper wire was wound around a covering part (a coated portion or a tape-wound part) of each of the bus bars of Example 1 to Comparative Example 2 the same number of turns, one end of an outermost copper wire of the covering part was connected to a negative electrode terminal of a withstand voltage tester, and one end of each of the bus bar conductor parts was connected to a positive electrode terminal of the withstand voltage tester. Entire surfaces of the bus bars were uniformly heated by a large torch with a flame temperature of 1100 to 1150 °C while a voltage of 1000 V was applied to the bus bars by the withstand voltage tester.

An insulation failure time during which an insulation state is destroyed, i.e., a short circuit occurs, was measured under the above-described voltage and heating temperature conditions, and measurement results are shown in Table 1 below.

**[Table 1]**

| Experimental Example 1 | Configuration of Bus Bar | Insulation Fail Time |
|---|---|---|
| Comparative Example 1 | copper bus bar conductor part+glass fiber tape | 1 minute and 35 seconds |
| Comparative Example 2 | copper bus bar conductor part+mica tape+glass fiber tape | 10 minute and 30 seconds |
| Example 1 | copper bus bar conductor part+fire-resistant silicone coated body+glass fiber tape | 14 minutes |
| Example 2 | copper bus bar conductor part+fire-resistant silicone coated body+mica tape | 15 minutes and 30 seconds |

As shown in Table 1 above, an insulation fail time of the cap-integrated bus bar of the present invention that includes the covering of the fire-resistant silicone and the protective layer is longest and shows a big difference from those of Comparative Examples 1 and 2.

Therefore, it can be seen that insulation characteristics of the fire-resistant bus bar of the present invention that includes the covering of the fire-resistant silicone and the protective layer are excellent. In particular, insulation performance of Example 2 in which the mica tape was used as a protective layer is better than those of the examples in which the glass fiber tape was used as a protective layer.

### (Experimental Example 2)

Fire-resistant silicones with compositions shown in Table 2 below were prepared while changing a weight ratio between the silicone compound of Chemical Formula 1 and a metal oxide.

Each of the fire resistant silicones of Examples 1-1 to 1-5 was applied to a certain thickness on a copper bus bar conductor part under the same conditions as in Experimental Example 1, a glass fiber tape of AGT6WO was wound therearound, copper wire was wound around a bus bar covering layer under the same conditions as in Experimental Example 1, and a withstand voltage tester was connected thereto.

In addition, heating was performed by a large torch under the same conditions as in Experimental Example 1 while a voltage was applied, and insulation fail times were measured. Measurement results are shown in Table 2 below.

**[Table 2]**

| Experimental Example 2 | Composition of covering of Fire-Resistant Silicone | Insulation Fail Time |
|---|---|---|
| Example 1-1 | 50 parts by weight of silicone compound: 50 parts by weight of metal oxide | 14 minutes |
| | (quartz: 20 parts by weight, pure silicon dioxide: 30 parts by weight) | |
| Example 1-2 | 50 parts by weight of silicone compound: 25 parts by weight of metal oxide | 12 minutes and 50 seconds |
| | (quartz: 10 parts by weight, pure silicon dioxide: 15 parts by weight) | |
| Example 1-3 | 50 parts by weight of silicone compound: 75 parts by weight of metal oxide | 16 minutes |
| | (quartz: 30 parts by weight, pure silicon dioxide: 45 parts by weight) | |
| Example 1-4 | 50 parts by weight of silicone compound: 20 parts by weight of metal oxide | 12 minutes |
| | (quartz: 10 parts by weight, pure silicon dioxide: 10 parts by weight) | |
| Example 1-5 | 50 parts by weight of silicone compound: 80 parts by weight of metal oxide | 16 minutes and 40 seconds |
| | (quartz: 35 parts by weight, pure silicon dioxide: 45 parts by weight) | |

In Examples 1-1 to 1-5 above, weight ratios between the silicone compounds and the metal oxides were 1:1, 1:0.5, 1:1.5, 1:0.4, and 1:1.6.

The insulation fail times of all of the Examples were longer than those of Comparative Examples 1 and 2 above. However, in the case of Example 1-4 in which the weight ratio of the metal oxide is less than 0.5, the insulation fail time was slightly short, and it is determined that the short insulation fail time was due to the generation of a slight insufficient amount of a ceramic structure having a high-density crystal structure at high temperatures due to an insufficient amount of the metal oxide.

In the case of Example 1-5 in which the weight ratio of the metal oxide is 1.6, the insulation fail time was sufficiently long but the amount of the metal oxide was excessive and thus the flexibility of the fire-resistant silicone decreased at room temperature, thus making it difficult to apply the fire-resistant silicone along the bus bar conductor part.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

### (Reference Numerals)

100, 100', 100": fire-resistant bus bar
P: central covering part
C: cap
110: bus bar conductor part
111: both ends
120: covering of fire-resistant silicone
121: cap part
122: body covering part
123: connection part
130: protective layer
131, 131': cap protective layer
132: body protective layer
B: fastening member
S: fastening member accommodation space
200: battery module
210, 220: terminal part
300: anti-flame partition
310: bus bar installation through-hole
320: bus bar installation groove
400: pack housing
1000: battery pack

## Claims

1. A cap-integrated fire-resistant bus bar comprising:
a bus bar conductor part;
a covering of a fire-resistant silicone including a cap part covering both ends of the bus bar conductor part and a body covering part integrally coupled to the cap part while surrounding a body of the bus bar conductor part between the both ends, the covering of the fire-resistant silicone being ceramicized at high temperatures to support the bus bar conductor part; and
a protective layer covering the covering of the fire-resistant silicone.

2. The cap-integrated fire-resistant bus bar of claim 1, wherein the fire-resistant silicone is ceramicized at a temperature of 500 to 1700 °C.

3. The cap-integrated fire-resistant bus bar of claim 1, wherein the fire-resistant silicone is ceramicized by sintering a silicone resin containing a silicone compound represented by Chemical Formula 1 below and a metal oxide containing silicon oxide, wherein: 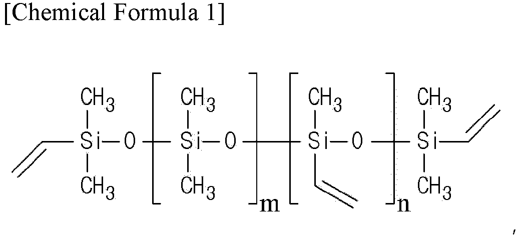 wherein m and n are each an integer of 10 to 30.

4. The cap-integrated fire-resistant bus bar of claim 3, wherein the silicone resin and the metal oxide are contained in a weight ratio of 1:0.5 to 1:1.5.

5. The cap-integrated fire-resistant bus bar of claim 3, wherein the metal oxide containing silicon oxide comprises at least one of pure silicon dioxide, silica, quartz, quartzite, tridymite, and keatite.

6. The cap-integrated fire-resistant bus bar of claim 1, wherein the protective layer comprises a glass fiber layer or a mica layer.

7. The cap-integrated fire-resistant bus bar of claim 1, wherein a fastening member accommodation space is formed in the cap part.

8. The cap-integrated fire-resistant bus bar of claim 1, wherein the protective layer is provided on an inner circumferential surface of the cap part.

9. The cap-integrated fire-resistant bus bar of claim 1, wherein the protective layer is not provided on a side of the covering of the fire-resistant silicone corresponding to a connection part connecting the cap part and the body covering part, and is provided only on an upper surface of the connection part.

10. The cap-integrated fire-resistant bus bar of claim 1, wherein the bus bar conductor part is coated with the covering of the fire-resistant silicone by insert injection molding performed by injecting the fire-resistant silicone into a mold into which the bus bar conductor part is inserted.

11. The cap-integrated fire-resistant bus bar of claim 1, wherein the cap-integrated fire-resistant bus bar is a high-voltage bus bar electrically connecting high-voltage terminal parts of a plurality of battery modules.

12. A battery pack comprising:
a plurality of battery modules;
an anti-flame partition installed between the plurality of battery modules;
the cap-integrated fire-resistant bus bar of any one of claims 1 to 11 for electrically connecting the plurality of battery modules; and
a pack housing accommodating the plurality of battery modules and the anti-flame partition.

13. The battery pack of claim 12, wherein the anti-flame partition is provided with a bus bar installation through-hole or a bus bar installation groove,
the cap-integrated fire-resistant bus bar is seated in the bus bar installation through-hole or the bus bar installation groove,
both ends of the bus bar conductor part of the cap-integrated fire-resistant bus bar are electrically coupled to terminal parts of battery modules located at both sides of the anti-flame partition, and
the cap part of the cap-integrated fire-resistant bus bar covers portions of the both ends and coupling portions of the terminal parts that are coupled to each other.
